# EUROPEAN PATENT APPLICATION

(11) **EP 4 586 359 A1**
(43) Date of publication of application: **16.07.2025**
(21) Application number: 24873870.0
(22) Date of filing: 11.10.2024
(51) Int. Cl.: H01M 10/0585, H01M 10/0562, H01M 10/052, H01M 4/13, H01M 4/70

(54) **ALL-SOLID-STATE BATTERY AND METHOD FOR MANUFACTURING SAME**

(30) Priority: 27.11.2023 KR 20230166203
(71) Applicant: LG Energy Solution, Ltd., SEOUL 07335 (KR)
(72) Inventor: LEE, Daejin, Daejeon 34122 (KR); CHOI, Seong Won, Daejeon 34122 (KR); KIM, Yeeun, Daejeon 34122 (KR); KIM, Ji Young, Daejeon 34122 (KR)
(74) Representative: Goddar, Heinz J.
(86) International application number: PCT/KR2024/015355
(87) International publication number: WO 2025/116265

(57) **Abstract**

One aspect of the disclosure relates to an all-solid-state battery and a method of manufacturing the same. More specifically, the all-solid-state battery according to the disclosure is shaped so that the positive electrode active material layer is surrounded by the positive electrode current collector and the solid electrolyte layer, so that stretching of the positive electrode active material layer during the pressurization process is prevented, and structural stability of the battery may be secured.

## Description

### Technical Field

### Cross-Reference to Related Applications

This application claims the benefit of priority to Korean Patent Application No. 10-2023-0166203, filed November 27, 2023.

### Technical Field

The disclosure relates to an all-solid-state battery and a method of manufacturing the same.

### Related Art

A variety of batteries are being researched to overcome the limitations of current lithium secondary batteries in terms of capacity, safety, output, enlargement, and microminiaturization.

Representative examples include metal-air batteries, which have a very high theoretical capacity compared to lithium secondary batteries; all-solid-state batteries, which have no risk of explosion and are safe; supercapacitors in terms of output; NaS batteries or redox flow batteries (RFB) for large-scale applications; and thin film batteries for microminiaturization. Continuous research is being conducted in academia and industry on these technologies.

An all-solid-state battery is a battery in which the liquid electrolyte used in a conventional lithium secondary battery is replaced with a solid electrolyte, and since no flammable solvent is used in the battery, there is no possibility of ignition or explosion due to the decomposition reaction of the conventional electrolyte, which greatly improves safety. It also has the advantage of being able to use Li metal or Li alloys as negative electrode materials, which can dramatically improve the energy density relative to the mass and volume of the battery.

Traditionally, for the manufacture of all-solid-state batteries composed entirely of solid materials, the cells have been manufactured by sequentially stacking a positive electrode, a solid electrolyte layer, and a negative electrode to form a laminate, followed by applying pressure to the exterior case after positioning the laminate. The electrodes and solid electrolyte layer used in all-solid-state batteries are not all the same size. Therefore, during the pressurization process, the size difference between the electrodes or the solid electrolyte layer can cause cracking at the ends. In addition, the positive electrodes are not rigid and have a high spreading property due to the binders contained within them. In the pressurization process, when pressure is applied unilaterally, parts of the positive electrode can be pushed to the unforced side, causing it to stretch unevenly and degrade the performance of the cell.

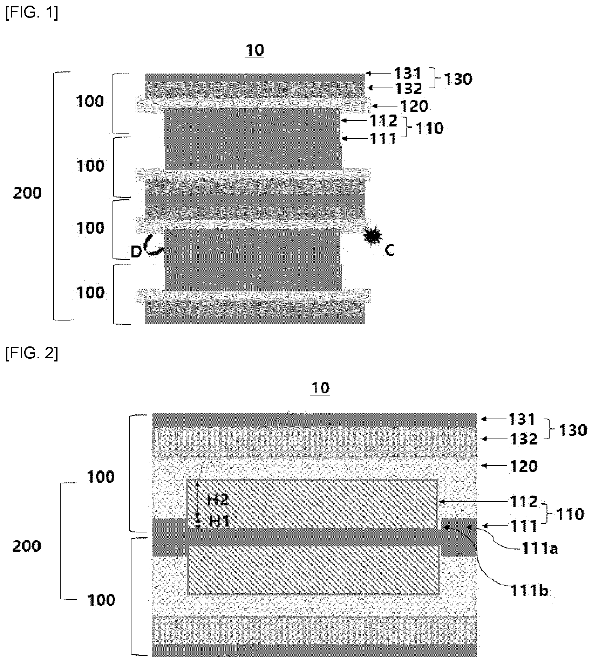

FIG. 1 is a schematic illustration of a longitudinal section of an all-solid-state battery according to the prior art.

The unit cell (100) of an all-solid-state battery according to the prior art has a structure with a positive electrode current collector (111), a positive electrode active material layer (112), a solid electrolyte layer (120), and a negative electrode layer (130) stacked sequentially. The stacked cell (200) is formed by stacking a plurality of unit cells (100), such as two or more unit cells (100) stacked together. In manufacturing the unit cell (100), the area of the positive electrode layer (110) including the positive electrode current collector (111) and the positive electrode active material layer (112) is small compared to the adjacent solid electrolyte layer (120), so it is not easy to align the solid electrolyte layer (120) on the positive electrode layer (110), which may cause a miss-alignment. Furthermore, after laminating the components as described above, cracks (C) may occur in the solid electrolyte layer (120) due to the difference in area between the adjacent positive electrode active material layer (112) and the solid electrolyte layer (120) when pressurized, and contact between the positive electrode and negative electrode layer may occur when the laminated structure itself undergoes disintegration (D).

Therefore, there is a need to develop technologies that can secure the structural stability of all-solid-state batteries to prevent cracks and positive electrode stretching in the pressurization process during cell assembly.

### [Prior Art Reference]

### [Patent Reference]

(Patent Reference 1) Japanese Laid-open Patent Publication No. 2022-186164

### Brief Description

The inventors of the disclosure have conducted various studies to solve the above problems, and have found that, in an all-solid-state battery comprising a unit cell or a stacked cell in which a plurality of unit cells are stacked, in a unit cell comprising a positive electrode current collector, a positive electrode active material layer, a solid electrolyte layer, and a negative electrode layer, the positive electrode active material layer having a relatively small size is surrounded by the positive electrode current collector and the solid electrolyte layer, and each component included in the unit cell does not deviate in size and has structural stability, so that it is possible to prevent problems such as the occurrence of cracks and the stretching of the positive electrode during the pressurization process.

Accordingly, it is an object of the disclosure to provide an all-solid-state battery with structural stability and a manufacturing method thereof.

To accomplish the above objectives, the disclosure provides an all-solid-state battery comprising a unit cell,
wherein the unit cell comprises a positive electrode layer, a solid electrolyte layer formed on the positive electrode layer, and a negative electrode layer formed on the solid electrolyte layer,
wherein the positive electrode layer comprises a positive electrode current collector with a receiving portion designed to house a portion of the positive electrode active material layer, and a positive electrode active material layer housed in the receiving portion,
wherein the solid electrolyte layer is formed in contact with the positive electrode current collector and positive electrode active material layer.

In one example of the disclosure, an all-solid-state battery is provided in which the height of the receiving portion is small compared to the height of the positive electrode active material layer.

In one example of the disclosure, an all-solid-state battery is provided, wherein a portion of the side of the positive electrode active material layer contacts the positive electrode current collector and a portion contacts the solid electrolyte layer, wherein a portion of the side of the positive electrode active material layer that contacts the positive electrode current collector is smaller than a portion that contacts the solid electrolyte layer.

In one example of the disclosure, an all-solid-state battery is provided, wherein the negative electrode layer comprises a negative electrode current collector; and a negative electrode active material layer formed on the negative electrode current collector, wherein the negative electrode active material layer is laminated to abut the solid electrolyte layer.

In one example of the disclosure, an all-solid-state battery is provided, wherein the negative electrode layer comprises a negative electrode current collector; and an anodeless coating layer formed on the negative electrode current collector, wherein the anodeless coating layer is laminated to abut the solid electrolyte layer.

In one example of the disclosure, an all-solid-state battery is provided, wherein two or more unit cells are stacked.

The disclosure provides a method of manufacturing an all-solid-state battery, comprising a unit cell manufacturing process, comprising: (S1) forming a positive electrode active material layer on the positive electrode current collector with a receiving portion designed to house a portion of the positive electrode active material layer;
(S2) forming a solid electrolyte layer on the positive electrode current collector and the positive electrode active material layer, excluding the receiving portion;
(S3) forming a negative electrode layer on the solid electrolyte layer; and
(S4) pressurizing and bonding the positive electrode current collector, positive electrode active material layer, solid electrolyte layer, and negative electrode layer in a stacked direction.

In one example of the disclosure, provided is a method of manufacturing an all-solid-state battery, wherein the pressurizing is performed at a pressure is 400 Mpa to 700 Mpa.

### Advantageous Effects

The unit cell included in the all-solid-state battery of the disclosure has a structure in which a positive electrode layer, a solid electrolyte layer, and a negative electrode layer are stacked sequentially, so that a relatively small positive electrode active material layer is surrounded by a positive electrode current collector and a solid electrolyte layer, so that the cross-sectional area of the unit cell is constant and the unit cell has structural stability, which has the effect of preventing the occurrence of cracks even in a pressurization process.

Furthermore, since a portion of the positive electrode active material layer is received and abuts the positive electrode current collector, and another portion of the positive electrode active material layer is surrounded by a solid electrolyte layer, it has the effect of preventing stretching of the positive electrode active material layer in the pressurization process.

### [Brief Description of Drawing]

FIG. 1 is a schematic illustration of a longitudinal section of an all-solid-state battery according to the prior art.
FIG. 2 is a schematic diagram illustrating a longitudinal section of an all-solid-state battery according to one example of the disclosure.
FIGs. 3a to 3d are schematic diagrams illustrating cross-sectional structures of all-solid-state batteries fabricated in Examples and Comparative Examples.
FIG. 4 is a graph showing the experimental results of the lifetime characteristics of all-solid-state batteries fabricated in Examples and Comparative Examples.
FIGs. 5a to 5c illustrate Scanning Electron Microscope (SEM) photographs of cross-sections of all-solid-state batteries fabricated in the Example and Comparative Examples.

### Detailed Description

Hereinafter, the disclosure will be described in more detail to provide a better understanding.

The terms and words used in this specification and claims are not to be construed in their ordinary or dictionary sense, but rather in a sense and concept consistent with the technical idea of the disclosure, based on the principle that the inventor may define the concept of a term as he/her sees fit to best describe his/her invention.

### All-solid-state Battery

The disclosure relates to an all-solid-state battery.

An all-solid-state battery according to the disclosure includes a unit cell, wherein the unit cell comprises a positive electrode layer, a solid electrolyte layer formed on the positive electrode layer, and a negative electrode layer formed on the solid electrolyte layer, wherein the positive electrode layer comprises a positive electrode current collector with a receiving portion designed to house a portion of the positive electrode active material layer, and a positive electrode active material layer housed in the receiving portion, wherein the solid electrolyte layer is formed abutting the positive electrode current collector and the positive electrode active material layer.

The unit cell is cuboidal in shape, with equal cross-sectional areas of the positive electrode layer, solid electrolyte layer, and negative electrode layer. Here, the cross-section of the positive electrode layer may be a cross-section of the positive electrode current collector, may be a cross-section of the positive electrode active material layer and a portion comprising the positive electrode current collector abutting the positive electrode active material layer, may be a cross-section of the positive electrode active material layer and a solid electrolyte layer abutting the positive electrode active material layer.

Furthermore, since the unit cell does not contain any heterogeneous materials or empty spaces other than the positive electrode layer, the solid electrolyte layer, and the negative electrode layer, problems such as structural instability or battery performance degradation due to heterogeneous materials or empty spaces can be avoided. Thus, the unit cell of the all-solid-state cell may comprise a positive electrode layer, a solid electrolyte layer, and a negative electrode layer.

In one example of the disclosure, the unit cell may be two or more stacked.

In the case of stacked cells, where two or more of the above unit cells are stacked, they also do not contain any heterogeneous material or empty space. The stacked cell may also have a cuboidal shape.

FIG. 2 is a schematic diagram illustrating a longitudinal section of an all-solid-state battery according to one example of the disclosure.

Referring to FIG. 2, the all-solid-state battery (10) may be in the form of a stacked cell (200) with two unit cells (100) stacked. The positive electrode active material layer (112) is relatively small in size compared to the solid electrolyte layer (120) and negative electrode layer (130). By designing the periphery of the positive electrode active material layer (112) to be surrounded by the positive electrode current collector (111) and the solid electrolyte layer (120), the step caused by size differences between the positive electrode active material layer (112) and the solid electrolyte layer (120) and the negative electrode layer (130) can be avoided.

The positive electrode current collector (111) includes a body portion (111a), and a receiving portion (111b) in which the positive electrode active material layer (112) is received. The receiving portion (111b) is formed as an indentation in the body portion (111a). A portion of the positive electrode active material layer (112) is received in the receiving portion (111b). The positive electrode active material layer (112) received in the receiving portion (111b) is surrounded by the positive electrode current collector (111).

Of the lengths (H1+H2) of the sides of the positive electrode active material layer (112), the length (H1) of the side abutting the positive electrode current collector (111) may be smaller than the length (H2) of the side abutting the solid electrolyte layer (120). If the length (H1) of the side abutting the positive electrode current collector (111) is large, the likelihood of contact with the negative electrode layer (130) increases and a short circuit may occur.

Since the receiving portion (111b) receives a portion of the positive electrode active material layer (112), the remaining positive electrode active material layer (112) that is not received in the receiving portion (111b) is surrounded by the solid electrolyte layer (120). The solid electrolyte layer (120) is formed on the positive electrode active material layer (112). The solid electrolyte layer (120) is formed to enclose the remainder of the positive electrode active material layer (112) that is not accommodated in the receiving portion (111b). Therefore, a solid electrolyte layer (120) is also formed on the body portion (111a) except the receiving portion (111b) in the positive electrode current collector (111).

The positive electrode active material layer (112), which is relatively small in size compared to the solid electrolyte layer (120) and negative electrode layer (130), is enclosed by the positive electrode current collector (111) and the solid electrolyte layer (120) to compensate for the size difference, resulting in a cuboidal shape of the unit cell (100). As a result, the stacked cell (200) stacked with the unit cell (100) also has a cuboidal shape.

When the pressurization process is performed by applying pressure in a certain direction to the cuboidal-shaped unit cell (100) or stacked cell (110), problems such as cracking and stretching of the positive electrode can be prevented, thus achieving structural stability. In addition, it is challenging to achieve the desired shape and area because the positive electrode stretches irregularly and spreads unevenly. However, in the disclosure, the stretching of the positive electrode can be prevented, allowing it to be controlled into the desired shape and area.

In one example of the disclosure, the height of the receiving portion may be small compared to the height of the positive electrode active material layer.

Since only a portion of the positive electrode active material layer is received in the receiving portion, it may be desirable that the height of the receiving portion is small relative to the height of the positive electrode active material layer. Since the positive electrode active material layer is received in the receiving portion, the positive electrode active material layer is fixed by the positive electrode active material layer, so that no stretching of the positive electrode occurs even in the pressurization process.

In one example of the disclosure, a portion of the side of the positive electrode active material layer contacts the positive electrode current collector and a portion of the side contacts the solid electrolyte layer, but the length of the side of the positive electrode active material layer which contacts the positive electrode current collector may be smaller than the length of the side which contacts the solid electrolyte layer.

Referring to the side of the positive electrode active material layer, a portion of the side of the positive electrode active material layer is received in the receiving portion of the positive electrode current collector and is in contact with the positive electrode current collector, and the remaining portion is in contact with the solid electrolyte layer. If the length of the side of the positive electrode active material layer which contacts the positive electrode current collector is larger than the length of the side which contacts the solid electrolyte layer, the probability of the positive electrode current collector contacting the negative electrode increases, and a short may occur.

In one example of the disclosure, the positive electrode layer includes a positive electrode current collector and a positive electrode active material layer formed on one side of the positive electrode current collector.

The positive electrode current collector supports the positive electrode active material layer and serves to transfer electrons between the outer wire and the positive electrode active material layer.

Furthermore, the positive electrode current collector is not particularly limited as long as it has a high electronic conductivity without causing chemical changes in the all-solid-state battery. For example, copper, stainless steel, aluminum, nickel, titanium, palladium, calcined carbon, copper, stainless steel, copper or stainless steel whose surface is treated with carbon, nickel, or silver, aluminum-cadmium alloy, and the like may be used as the positive electrode current collector.

Furthermore, the positive electrode current collector may have a fine uneven structure on the surface of the positive electrode current collector or adopt a three-dimensional porous structure to strengthen the binding force with the positive electrode active material layer. Accordingly, the positive electrode current collector may comprise various forms such as film, sheet, foil, mesh, net, porous material, foam, nonwoven material, and the like.

The positive electrode active material layer may be smaller in area than the positive electrode current collector and positioned on the positive electrode current collector.

The positive electrode active material layer includes a positive electrode active material, a conductive material, and a binder. Further, the positive electrode active material layer may further comprise a solid electrolyte.

Furthermore, the positive electrode active material may be any material capable of reversibly adsorbing and releasing lithium ions, without being particularly limited thereto, for example, a layered compound such as lithium cobalt oxide (LiCoO₂), lithium nickel oxide (LiNiO₂), Li[NiₓCo_{y}Mn_{z}Mᵥ]O₂ (wherein M is any one or two or more elements selected from the group consisting of Al, Ga and In; and 0.3≤x<1.0, 0≤y, z≤0.5, 0≤v≤0.1, and x+y+z+v=1), Li(LiₐM_{b-a-b'}M'_{b'})O_{2-c}A_{c} (wherein 0≤a≤0.2, 0.6≤b≤1, 0≤b'≤0.2, and 0≤c≤0.2; M comprises at least one selected from the group consisting of Mn, Ni, Co, Fe, Cr, V, Cu, Zn, and Ti; M' comprises at least one selected from the group consisting of Al, Mg and B; and A comprises at least one selected from the group consisting of P, F, S and N), or a compound substituted with one or more transition metals; a lithium manganese oxide such as a compound of formula Li_{1+y}Mn_{2-y}O₄ (wherein y is 0 to 0.33), LiMnO₃, LiMn₂O₃, or LiMnO₂; a lithium copper oxide (Li₂CuO₂); a vanadium oxide, such as LiV₃O₃, LiFe₃O₄, V₂O₅, or Cu₂V₂O₇ ; a Ni site-type lithium nickel oxide represented by formula LiNi_{1-y}MyO₂ (wherein M is Co, Mn, Al, Cu, Fe, Mg, B or Ga, and y is 0.01 to 0.3; a lithium manganese complex oxide represented by formula LiMn2-yMyO2 (wherein M is Co, Ni, Fe, Cr, Zn, or Ta, and y is 0.01 to 0.1) or Li₂Mn₃MO₈ (wherein M is Fe, Co, Ni, Cu, or Zn); LiMn₂O₄, in which a portion of the Li in the formula is substituted by an alkaline earth metal ion; a disulfide compound; Fe₂(MoO₄)₃; and the like, but not limited thereto.

Further, the positive electrode active material may be included in an amount of 60 to 80% by weight based on the total weight of the positive electrode active material layer. Specifically, the amount of the positive electrode active material may be 60% by weight, 65% by weight or more, or 68% by weight or more, 72% by weight or less, 75% by weight or less, or 80% by weight or less. If the amount of the positive electrode active material is less than 60% by weight, the battery performance may be reduced, and if the amount is greater than 80% by weight, the mass transfer resistance may be increased.

Furthermore, the solid electrolyte may have an argyrodite structure, and more specifically, may include a sulfide-based solid electrolyte, a halide-based solid electrolyte, or an oxide-based solid electrolyte.

The sulfide-based solid electrolyte may comprise a compound represented by Formula 1 below, or a mixture thereof:

<Formula 1> LiₐM_{b}S_{c}X_{d}

wherein M is selected from P, Sn, Sb, As, and Ge;
wherein X is selected from CI, Br and I,
5 ≤ a ≤ 7.5, 0.5 < b ≤ 1.5, 4 < c ≤ 6, and 0.5 < d ≤ 2.

The halide-based solid electrolyte may be represented by Formula 2 below:

<Formula 2> Li₆₋₃ₐMₐBr_{b}Cl_{c}

wherein M is a metal other than Li, 0<a<2, 0≤b≤6, 0≤c≤6, and b+c=6.

For example, the halide solid electrolyte may comprise at least one selected from the group consisting of Li₃YBr₆, Li₃YCl₆ and Li₃YBr₂Cl₄.

The oxide-based solid electrolyte can be suitably selected from the group consisting of, but not limited to, LLT-based compounds with perovskite structure, such as Li₃ₓLa_{2/3-x}TiO₃, LISICON such as Li₁₄Zn(GeO₄)₄, LATP-based compounds such as Li_{1.3}Al_{0.3}Ti_{1.7}(PO₄)₃, LAGP-based compounds such as (Li₁₊ₓGe₂₋ₓAlₓ(PO₄)₃), phosphate-based compounds such as LiPON, and the like.

Furthermore, the conductive material is not particularly limited as long as it prevents side reactions in the internal environment of an all-solid-state battery and has excellent electrical conductivity without causing chemical changes in the battery, and graphite or conductive carbon can be used as a representative example, for example, graphite such as natural graphite, artificial graphite, and the like; carbon black such as carbon black, acetylene black, ketjen black, denka black, thermal black, channel black, furnace black, lamp black, summer black, and the like; carbon-based materials having a crystal structure of graphene or graphite; conductive fibers such as carbon fibers, metal fibers, etc.; carbon fluorides; metal powders, such as aluminum powder, nickel powder, etc.; conductive whiskeys, such as zinc oxide, potassium titanate, etc.; conductive oxides, such as titanium oxide; and conductive polymers, such as polyphenylene derivatives; can be used alone or in a mixture of two or more of the foregoing, but are not necessarily limited thereto. Preferably, the conductive material may comprise vapor-grown carbon fiber (VGCF).

Further, the conductive material may be comprised in an amount of 1% by weight to 5% by weight based on the total weight of the positive electrode active material layer, and more specifically, the amount of the conductive material may be 1% by weight or more, 1.5% by weight or more, 2% by weight or more, and may be 4% by weight or less, 4.5% by weight or less, or 5% by weight or less. If the amount of the conductive material is too small, such as less than 1% by weight, it is difficult to expect the effect of improving the electrical conductivity or the electrochemical properties of the battery may be degraded, and if it is too large, such as more than 5% by weight, the amount of positive electrode active material may be relatively small, resulting in a decrease in capacity and energy density. The method of incorporating the conductive material into the positive electrode is not substantially limited, and any conventional method known in the art can be used, such as mixing with or coating the positive electrode active material.

The binder is a component that assists in the bonding of the positive electrode active material and the conductive material or the bonding to a current collector, and may comprise at least one selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polypichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise polytetrafluoroethylene (PTFE).

Further, the binder may be comprised in an amount of 0.5% by weight to 4% by weight based on the total weight of the positive electrode active material layer, and more specifically, the amount of the binder may be 0.5% by weight or more, 1% by weight or more, 1.5% by weight or more, 3% by weight or less, 3.5% by weight or less, or 4% by weight or less. If the binder amount is less than 0.5% by weight, the adhesion of the positive electrode active material to the positive electrode current collector may be reduced, and if the binder amount is greater than 4% by weight, the adhesion may be improved, but the amount of the positive electrode active material may be reduced, resulting in a lower cell capacity.

In one example of the disclosure, the solid electrolyte layer may be large relative to the area of the positive electrode active material layer. Here, the area of the solid electrolyte layer and the area of the positive electrode active material layer indicate the areas when the solid electrolyte layer and the positive electrode active material layer are viewed from the top.

Since the solid electrolyte layer wraps around the positive electrode active material layer, the lithium ion transfer area is increased, which may be advantageous in terms of ion conductivity.

Further, the solid electrolyte layer may comprise a sulfide-based solid electrolyte, a halide-based solid electrolyte, or an oxide-based solid electrolyte. In terms of lithium ion conductivity, the solid electrolyte layer may comprise a sulfide-based solid electrolyte having an argyrodite-type crystal structure.

The sulfide-based solid electrolyte may comprise a compound represented by Formula 1 below, or a mixture thereof:

<Formula 1> LiₐM_{b}A_{c}X_{d}

wherein M is selected from P, Sn, Sb, As, and Ge;
wherein A is selected from S, Se, and Te,
wherein X is selected from CI, Br and I,
5 ≤ a ≤ 7.5, 0.5 < b ≤ 1.5, 4 < c ≤ 6, and 0.5 < d ≤ 2.

The halide-based solid electrolyte may be represented by Formula 2 below:

<Formula 2> Li₆₋₃ₐMₐBr_{b}Cl_{c}

wherein M is a metal other than Li, 0<a<2, 0≤b≤6, 0≤c≤6, and b+c=6.

For example, the halide solid electrolyte may comprise at least one selected from the group consisting of Li₃YBr₆, Li₃YCl₆ and Li₃YBr₂Cl₄.

The oxide-based solid electrolyte can be suitably selected from the group consisting of, but not limited to, LLT-based compounds with perovskite structure, such as Li₃ₓLa_{2/3-x}TiO₃, LISICON such as Li₁₄Zn(GeO₄)₄, LATP-based compounds such as Li_{1.3}Al_{0.3}Ti_{1.7}(PO₄)₃, LAGP-based compounds such as (Li₁₊ₓGe₂₋ₓAlₓ(PO₄)₃), phosphate-based compounds such as LiPON, and the like.

In one example of the disclosure, the negative electrode layer comprises a negative electrode current collector; and a negative electrode active material layer formed on the negative electrode current collector, wherein the negative electrode active material layer may be laminated to abut the solid electrolyte layer.

Alternatively, the negative electrode layer may comprise: a negative electrode current collector; and an anodeless coating layer formed on the negative electrode current collector, wherein the anodeless coating layer is laminated to abut the solid electrolyte layer.

The negative electrode active material layer includes a negative electrode active material, a binder, and a conductive material.

The negative electrode active material may comprise a material capable of reversibly intercalating or deintercalating lithium (Li⁺), a material capable of reacting with lithium ions to reversibly form a lithium-containing compound, a lithium metal, or a lithium alloy.

The material into which the lithium ions (Li⁺) can be reversibly inserted or removed can be, for example, crystalline carbon, amorphous carbon, or a mixture thereof. The material capable of reacting with the lithium ions (Li⁺) to reversibly form a lithium-containing compound may be, for example, tin oxide, titanium nitrate, or silicon. The lithium alloy may be, for example, an alloy of lithium (Li) and a metal selected from the group consisting of indium (In), sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be a lithium metal or a lithium-indium alloy (Li-In), more specifically, it may be in the form of a lithium metal or a lithium thin film or a lithium-indium alloy thin film or powder.

The negative electrode active material may be comprised in an amount of 40 to 80% by weight based on the total weight of the negative electrode active material layer. Specifically, the amount of the negative electrode active material may be 40% by weight or more, 50% by weight or more, or may be 70% by weight or less, or 80% by weight or less. If the amount of the negative electrode active material is less than 40% by weight, the connectivity between the wet negative electrode active material layer and the dry negative electrode active material layer may be insufficient, and if the amount is greater than 80% by weight, the mass transfer resistance may be greater.

The binder is a component that assists in the bonding of the negative electrode active material and the conductive material or the bonding to a negative electrode current collector, and may comprise at least one selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polypichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise polytetrafluoroethylene (PTFE).

Further, the binder may be comprised in an amount of 0.5% by weight to 4% by weight based on the total weight of the negative electrode active material layer, and more specifically, the amount of the binder may be 0.5% by weight or more, 1% by weight or more, 1.5% by weight or more, 3% by weight or less, 3.5% by weight or less, or 4% by weight or less. If the binder amount is less than 0.5% by weight, the adhesion of the positive electrode active material to the negative electrode current collector may be reduced, and if the binder amount is greater than 4% by weight, the adhesion may be improved, but the amount of the negative electrode active material may be reduced, resulting in a lower cell capacity.

Furthermore, the above conductive material is not particularly limited as long as it prevents side reactions in the internal environment of the all-solid-state battery and has excellent electronic conductivity without causing chemical changes in the battery, and graphite or conductive carbon can be used as a representative, for example, graphite such as natural graphite, artificial graphite, and the like; carbon black such as carbon black, acetylene black, ketchen black, denka black, thermal black, channel black, furnace black, lamp black, summer black, and the like; Carbon-based materials having a crystal structure of graphene or graphite; conductive fibers, such as carbon fibers and metal fibers; carbon fluoride; metal powders, such as aluminum powder and nickel powder; conductive whiskeys, such as zinc oxide and potassium titanate; conductive oxides, such as titanium oxide; and conductive polymers, such as polyphenylene derivatives; may be used alone or in a mixture of two or more of the foregoing, but are not necessarily limited thereto. Preferably, the conductive material may comprise vapor-grown carbon fiber (VGCF).

Further, the conductive material may be comprised in an amount of 1% by weight to 5% by weight based on the total weight of the negative electrode active material layer, and more specifically, the amount of the conductive material may be 1% by weight or more, 1.5% by weight or more, 2% by weight or more, and may be 4% by weight or less, 4.5% by weight or less, or 5% by weight or less. If the amount of the conductive material is too small, such as less than 1% by weight, it is difficult to expect the effect of improving the electrical conductivity or the electrochemical properties of the battery may be degraded, and if it is too large, such as more than 5% by weight, the amount of negative electrode active material may be relatively small, resulting in a decrease in capacity and energy density. The method of incorporating the conductive material into the negative electrode is not substantially limited, and any conventional method known in the art can be used, such as mixing with or coating the negative electrode active material.

Furthermore, the negative electrode current collector is not particularly limited as long as it is conductive without causing chemical changes in the battery, for example, copper, stainless steel, aluminum, nickel, titanium, calcined carbon, copper or stainless steel whose surface is treated with carbon, nickel, or silver, aluminum-cadmium alloy, and the like can be used. Also, like the positive electrode current collector, the negative electrode current collector can be in various forms, such as a film, sheet, foil, net, porous material, foam, nonwoven material, etc. with fine irregularities formed on the surface.

The method of manufacturing a negative electrode is not particularly limited, and can be manufactured by forming a negative electrode active material layer on the negative electrode current collector using a conventional method of forming a layer or a film. For example, methods such as pressing, coating, or deposition can be utilized. The negative electrode of the disclosure also includes a case in which a metallic lithium thin film is formed on a metal plate by initial charging after the battery is assembled without a lithium thin film on the negative electrode current collector.

Further, the anodeless coating layer does not include a negative electrode active material, and a negative electrode active material may be formed in the anodeless coating layer by charging. For example, when a battery is charged, lithium ions may be displaced from the positive electrode, causing lithium metal to precipitate from the negative electrode. In other words, the anodeless coating layer may be a film that induces lithium precipitation.

The anodeless coating layer may comprise metal particles and carbon material particles, and more specifically, may comprise a carbon material-metal composite.

The carbon material particles may be, for example, amorphous carbon material particles. However, carbon material particles are not limited to amorphous particles. Specific examples of amorphous carbon materials may include carbon black, such as acetylene black, furnace black, and ketjen black, graphene, or combinations thereof.

Further, the metal particles may form an alloy with lithium, and the metal particles may be one or more particles selected from silver (Ag), gold, platinum, palladium, silicon, aluminum, bismuth, tin, indium, and zinc. The anodeless coating layer may be formed as a very thin film with a micro-thickness, for example, a thickness of 10 µm or less.

Preferably, the anodeless coating layer may comprise an Ag-C composite as a carbon material-metal composite, and upon first charging, lithium may precipitate between the negative electrode current collector and the coating layer comprising the Ag-C composite.

In one example of the disclosure, the all-solid-state battery may be a pouch-type all-solid-state battery.

### Method for Producing an All-solid-state battery

The disclosure also relates to a method of manufacturing an all-solid-state battery.

A method of manufacturing an all-solid-state battery according to the disclosure comprising a unit cell manufacturing process comprises steps (S1) to (S4) below:
(S1) forming a positive electrode active material layer on the positive electrode current collector with a receiving portion designed to house a portion of the positive electrode active material layer;
(S2) forming a solid electrolyte layer on the positive electrode current collector and the positive electrode active material layer, excluding the receiving portion;
(S3) forming a negative electrode layer on the solid electrolyte layer; and
(S4) pressurizing and bonding the positive electrode current collector, positive electrode active material layer, solid electrolyte layer, and negative electrode layer in a stacked direction.

The constituents and shapes of the positive electrode current collector, the positive electrode active material layer, the solid electrolyte layer, and the negative electrode layer are as described above.

Hereinafter, a method of manufacturing an all-solid-state battery according to the disclosure will be described in more detail by each step.

In one example of the disclosure, in step (S1) above, a positive electrode active material layer may be formed on the positive electrode current collector in which a receiving portion is formed in which a portion of the positive electrode active material layer is received.

The positive electrode active material layer may be prepared by a wet process or a dry process, respectively. Positive electrodes prepared according to the above manufacturing process of the positive electrode active material layer may be referred to as wet positive electrodes and dry positive electrodes, respectively.

When the wet process is carried out, the positive electrode active material layer may be formed by applying a slurry for forming the positive electrode active material layer onto the positive electrode current collector. Specifically, the positive electrode active material layer can be prepared by applying and drying a slurry for forming a positive electrode active material layer prepared by mixing a positive electrode active material, a conductive material, and a binder in an organic solvent on the receiving portion of the positive electrode current collector. In this case, it is preferable to use an organic solvent that can uniformly disperse a positive electrode active material, a binder and a conductive material, and is easily evaporated. Specifically, the examples include acetonitrile, methanol, ethanol, tetrahydrofuran, water, and isopropyl alcohol.

Furthermore, when the dry process is carried out, the positive electrode active material layer may be separately manufactured in the form of a sheet and then punched to fit the size of the receiving portion of the positive electrode current collector and bonded to the receiving portion of the positive electrode current collector. In this case, the sheet may be prepared in a conventional manner using a slurry for forming a positive electrode active material layer as described above.

In one example of the disclosure, in step (S2) above, a solid electrolyte layer may be formed on the positive electrode current collector and the positive electrode active material layer except for the receiving portion.

The positive electrode current collector includes a body portion and a receiving portion formed as an indentation in the body portion. A positive electrode active material layer is formed on the receiving portion. Therefore, when the solid electrolyte layer is formed on the positive electrode active material layer, the solid electrolyte layer can also be formed on the body portion in the positive electrode current collector except the receiving portion.

The solid electrolyte layer may be prepared by applying a slurry obtained by mixing a solid electrolyte and a binder in a solvent onto the positive electrode active material layer, followed by drying.

The solid electrolyte may comprise at least one selected from the group consisting of a sulfide-based solid electrolyte, a halide-based solid electrolyte, and an oxide-based solid electrolyte, as previously described. Preferably, the solid electrolyte may comprise a sulfide-based solid electrolyte having an argyrodite-type crystal structure.

Further, the binder resin may comprise at least one selected from the group consisting of acrylic copolymers, acrylic block copolymers, and random copolymers of acrylic monomers or oligomers.

Further, the binder may comprise 5 to 15 parts by weight per 100 parts by weight of the solid electrolyte. Specifically, the amount of the binder may be 5 parts or more by weight, 7 parts or more by weight, or 9 parts or more by weight, or 11 parts or less by weight, 13 parts or less by weight, or 15 parts or less by weight. If the amount of the binder is less than 5 parts by weight, it may be difficult to form a solid electrolyte layer, and if it is more than 15 parts by weight, the ionic conductivity may decrease.

Furthermore, the solvent is not particularly limited as long as it is a solvent capable of dissolving and/or dispersing the solid electrolyte and/or binder to form a slurry. For example, the solvent may be at least one selected from the group consisting of dimethylsulfoxide (DMSO), isopropyl alcohol, N-methylpyrrolidone (NMP), acetone, xylene, N,N-Dimethylmethanamide (DMF), benzene, tetrahydrofuran (THF), and water. The amount of solvent used can be adjusted by considering the thickness of the coating layer, the properties of the solid electrolyte prepared, etc.

The application method may be a bar coating, roll coating, spin coating, slit coating, die coating, blade coating, comma coating, slot die coating, lip coating, or solution casting, but is not limited thereto, as long as the application is capable of forming a layer.

The drying is not particularly limited as long as the drying method can evaporate the solvent after application to form a layer. For example, the drying may be performed at 300°C or less. Specifically, the drying temperature may be 300°C or less, 200°C or less, 150°C or less, or 100°C or less.

In one example of the disclosure, in step (S3) above, a negative electrode layer may be formed on the solid electrolyte layer.

The method of forming a negative electrode layer on the a solid electrolyte layer is not particularly limited as long as it is a method conventionally practiced in the art, and methods such as lamination can be used.

In one example of the disclosure, in step (S4) above, the positive electrode current collector, the positive electrode active material layer, the solid electrolyte layer, and the negative electrode layer may be joined by applying pressure in the direction in which they are stacked.

Step (S4) above refers to the process of pressurizing the unit cell after it is manufactured, but pressurization can also be performed after the stacked cell is manufactured, or it can be performed by pressurizing it in the exterior case.

The pressure may be 400 Mpa to 700 Mpa, more specifically, it may be 400 Mpa or more, 450 Mpa or more, or 500 Mpa or more, and may be 600 Mpa or less, 650 Mpa or less, or 700 Mpa or less. If the pressure is less than 400 Mpa, the pressure is insufficient to produce an all-solid-state battery, or pores may remain inside the positive electrode, increasing resistance; if it is more than 700 Mpa, the pressure may be higher than necessary, causing parts of the battery to crack.

### Examples

Hereinafter, preferred examples of the disclosure are described for the purpose of illustrating the disclosure, but it will be apparent to those skilled in the art that various changes and modifications are possible within the scope of the disclosure and the technical idea, and that such changes and modifications fall within the scope of the appended patent claims.

### Example 1

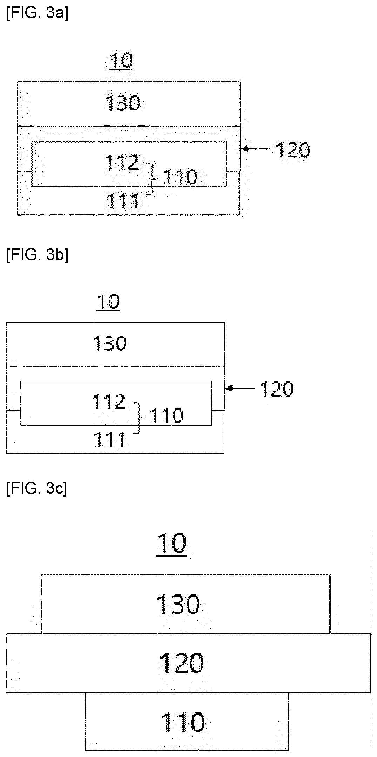

An all-solid-state battery (10) having a cross-sectional structure as shown in FIG. 3a was fabricated.

Aluminum foil was prepared as the positive electrode current collector (111). The aluminum foil includes a body portion and a receiving portion formed as an indentation in the body portion.

After attaching a dry sheet containing NMC(Ni,Co,Mn)O₂ to the receiving portion, the positive electrode layer (110) was prepared by forming a positive electrode active material layer (112).

Then, a slurry for forming a solid electrolyte was dip-coated on the body portion, which is the part of the positive electrode current collector (111) excluding the receiving portion, and the positive electrode active material layer (112), and then dried to form a solid electrolyte layer (120). The slurry for forming a solid electrolyte was prepared by mixing a sulfide-based solid electrolyte having an argyrodite-based crystal structure and a rubber-based binder in a 1:1 weight ratio and adding it to an N-methylpyrrolidone (NMP) solvent.

The positive electrode active material layer (112) was formed to be surrounded by the positive electrode current collector (111) and solid electrolyte layer (120). In the side of the positive electrode active material layer (112), the length of the portion in contact with the positive electrode current collector (111) was smaller than the length of the portion in contact with the solid electrolyte layer (120).

Thereafter, the negative electrode layer (130) was stacked on the solid electrolyte layer (120) and pressurized to a pressure of 500 Mpa to prepare an all-solid-state battery (10) in the form of unit cell. The negative electrode layer (130) was anodeless, wherein an Ag-C composite was formed on one side of the Cu current collector.

### Example 2

An all-solid-state battery (10) having the cross-sectional structure shown in FIG. 3b was fabricated.

Aluminum foil was prepared as the positive electrode current collector (111). The aluminum foil includes a body portion and a receiving portion formed as an indentation in the body portion.

The positive electrode (110) was prepared by coating a slurry comprising NMC(Ni,Co,Mn)O₂ on the receiving portion to form a positive electrode active material layer (112).

Then, a slurry for forming a solid electrolyte was dip-coated on the body portion, which is the part of the positive electrode current collector (111) excluding the receiving portion, and the positive electrode active material layer (112), and then dried to form a solid electrolyte layer (120). The slurry for forming a solid electrolyte was prepared by mixing a sulfide-based solid electrolyte having an argyrodite-based crystal structure and a rubber-based binder in a 1:1 weight ratio and adding it to an N-methylpyrrolidone (NMP) solvent.

The positive electrode active material layer (112) was formed to be surrounded by the positive electrode current collector (111) and solid electrolyte layer (120). In the side of the positive electrode active material layer (112), the length of the portion in contact with the positive electrode current collector (111) was smaller than the length of the portion in contact with the solid electrolyte layer (120).

Thereafter, the negative electrode layer (130) was stacked on the solid electrolyte layer (120) and pressurized to a pressure of 500 Mpa to prepare an all-solid-state battery (10) in the form of unit cell. The negative electrode layer was anodeless, wherein an Ag-C composite was formed on one side of the Cu current collector.

### Comparative Example 1

An all-solid-state battery with the cross-sectional structure shown in Fig. 3c was fabricated.

The all-solid-state battery (10) was prepared by stacking the positive electrode layer (110), solid electrolyte layer (120), and negative electrode layer (130), and pressurizing them to 500 Mpa pressure. Here, the positive electrode layer (110), the solid electrolyte layer (120), and the negative electrode layer (130) are all in the form of sheets, the size of which is in the order of positive electrode layer (110) < negative electrode layer (130) < solid electrolyte layer (120). Further, the constituents of the positive electrode layer (110), the solid electrolyte layer (120), and the negative electrode layer (130) were the same as in Example 2.

### Comparative Example 2

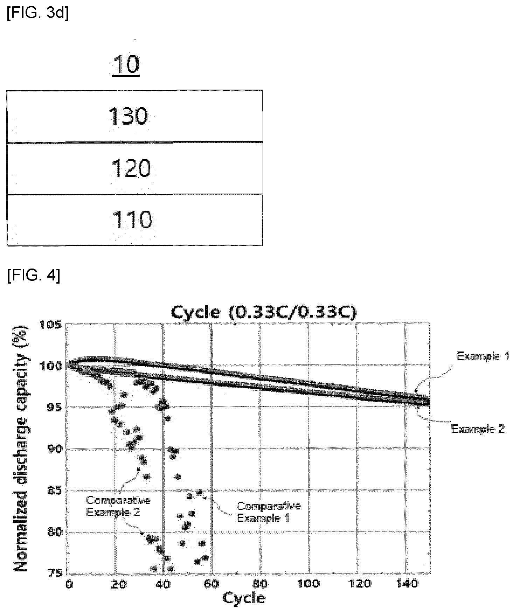

An all-solid-state battery with the cross-sectional structure shown in Fig. 3d was fabricated.

The all-solid-state battery was prepared in the same manner as in Comparative Example 1, except that the positive electrode layer (110), solid electrolyte layer (120), and negative electrode layer (130) were all of the same size.

### Experimental Example 1: Experements for performance evaluation of all-solid-state batteries

Performance evaluation experiments were conducted on all-solid-state batteries. To evaluate the performance of the all-solid-state battery, the lifetime characteristics were evaluated by measuring the discharge capacity over cycles at 0.33C/0.33C.

As a result, as shown in FIG. 4, it can be seen that Examples 1 and 2 have significantly better lifetime characteristics compared to Comparative Examples 1 and 2. These results can be attributed to the structural stability of the all-solid-state battery.

### Experimental Example 2: Confirmation of cracks

The pressurization process was checked for cracks in the all-solid-state battery.

Cross-sections of the unit cells of Examples 1 and 2 and Comparative Examples 1 and 2 were observed by scanning electron microscope (SEM).

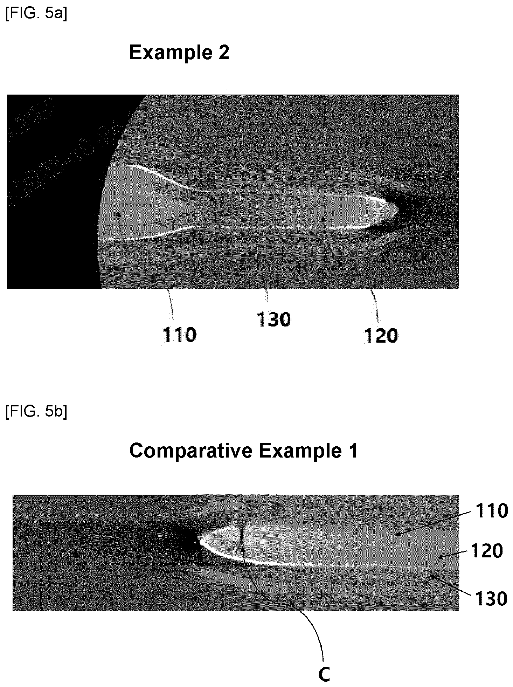

FIGs. 5a to 5c illustrate Scanning Electron Microscope (SEM) photographs of cross-sections of all-solid-state batteries fabricated in the Example and Comparative Examples.

FIG. 5a shows a cross-sectional view of the battery, which is generally free of damage, including cracks.

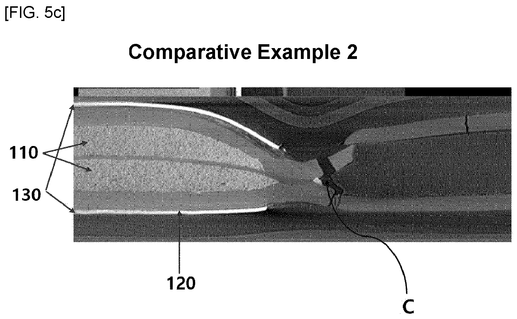

Also, referring to FIGs. 5b and 5c, it can be seen that the positive electrode layer (110) is stretched and cracking occurs, causing the cracking to extend to the solid electrolyte layer (130).

Although the disclosure has been described above by way of limited examples and drawings, the invention is not limited thereby, and various modifications and variations may be made by those having ordinary skill in the art, within the technical idea of the invention and the equivalent scope of the patent claims set forth below.

### [Reference Numerals]

10: All-solid-state battery
100: Unit cell
110: Positive electrode layer
111: Positive electrode current collector
111a: Body portion, 111b: Receiving portion
112: Positive electrode active material layer
120: Solid electrolyte layer
130: Negative electrode layer
131: Negative electrode current collector, 132: Negative electrode active material layer
200: Stacked cell
C: Crack, D: Disintegration

## Claims

1. An all-solid-state battery comprising a unit cell,
wherein the unit cell comprises a positive electrode layer, a solid electrolyte layer formed on the positive electrode layer, and a negative electrode layer on the solid electrolyte layer,
wherein the positive electrode layer comprises a positive electrode current collector with a receiving portion designed to house a portion of the positive electrode active material layer, and a positive electrode active material layer housed in the receiving portion,
wherein the solid electrolyte layer is in contact with the positive electrode current collector and positive electrode active material layer.

2. The all-solid-state battery according to claim 1,
wherein a height of the receiving portion is small relative to a height of the positive electrode active material layer.

3. The all-solid-state battery according to claim 1,
wherein a portion of a side of the positive electrode active material layer abuts the positive electrode current collector and a portion abuts the solid electrolyte layer,
wherein the portion of the side of the positive electrode active material layer that is in contact with the positive electrode current collector is smaller than the portion that is in contact with the solid electrolyte layer.

4. The all-solid-state battery according to claim 1,
wherein the negative electrode layer comprises: a negative electrode current collector; and a negative electrode active material layer on the negative electrode current collector,
wherein the negative electrode active material layer is laminated to abut the solid electrolyte layer.

5. The all-solid-state battery according to claim 1,
wherein the negative electrode layer comprises a negative electrode current collector; and an anodeless coating layer formed on the negative electrode current collector,
wherein the anodeless coating layer is laminated to abut the solid electrolyte layer.

6. The all-solid-state battery according to claim 1, comprising two or more unit cells,
wherein the two or more unit cells are stacked.

7. A method of manufacturing an all-solid-state battery, comprising a unit cell manufacturing process, comprising: (S1) forming a positive electrode active material layer on the positive electrode current collector with a receiving portion designed to house a portion of the positive electrode active material layer;
(S2) forming a solid electrolyte layer on the positive electrode current collector and the positive electrode active material layer, excluding the receiving portion;
(S3) forming a negative electrode layer on the solid electrolyte layer; and
(S4) pressurizing and bonding the positive electrode current collector, positive electrode active material layer, solid electrolyte layer, and negative electrode layer in a stacked direction.

8. The method of claim 7,
wherein the pressurizing is performed at a pressure of 400 Mpa to 700 Mpa.
